# EUROPEAN PATENT SPECIFICATION

(11) **EP 2 117 953 B1**
(45) Date of publication and mention of the grant of the patent: **25.09.2013**
(21) Application number: 08700431.3
(22) Date of filing: 05.02.2008
(51) Int. Cl.: B65D 65/40, B65D 65/28, B32B 3/10, B32B 7/02

(54) **PACKAGING FILMS**
VERPACKUNGSFOLIEN
FILMS D'EMBALLAGE

(30) Priority: 05.02.2007 AU 2007900546 P
(43) Date of publication of application: 18.11.2009
(73) Proprietor: Amcor Limited, Hawthorn, VIC 3122 (AU)
(72) Inventor: FORSYTH, John, 26.001 Logrono (La Rioja) (ES)
(74) Representative: Hoarton, Lloyd Douglas Charles
(86) International application number: PCT/AU2008/000136
(87) International publication number: WO 2008/095240

(56) References cited:
- EP-A- 0 737 468
- JP-A- 10 194 355
- US-A- 5 049 624
- US-A- 6 117 123
- DATABASE WPI Week 200451, Derwent Publications Ltd., London, GB; Class A92, AN 2004-528713, XP008137710 & JP 2004 187599 A (TOYO SEIKAN KAISHA LTD) 08 July 2004

## Description

The present invention relates to a package according to the preamble of claim 1.

The present invention also relates to a method of manufacturing a package according to the preamble of claim 2.

More particularly, the present invention relates to multi-compartment packages made from laminated flexible films, with the compartments storing products having different packaging requirements, in particular different requirements in relation to exposure to gases, such as oxygen.

Flexible films are available in many forms, including but not limited to single layer extruded films, multiple layer coextruded films, and adhesive laminated films. All of these films may have printing on exposed surfaces of the films.

Flexible films may comprise any number of layers made from, by way of example, paper, polymers, and metals. Further, any layer may comprise modifiers, pigments, processing aids or other additives to modify one or more properties of the layer. Further, by way of example, any layer may be in the form of a foil, sheet and a coating.

The use of layers and combinations of layers in the manufacture of flexible films provides an opportunity to provide tailored properties. For example, polymers with excellent heat seal properties such as polyethylene have very poor barrier properties for gases, such as oxygen. In order to address this issue, it is known to laminate together a polymer layer having heat seal properties and a metal foil layer to form a laminated flexible film. In this structure, the metal foil provides a barrier to the transfer of gases through the film.

The oxygen transmission rate ("OTR") is a measure of the extent to which a material can act as a barrier to oxygen.

One known unit for the OTR of a polymer is cubic centimeters (or mL) of gas at standard temperature and pressure ("STP") passing through a 25 micron film, with an area of 1 square meter, over 24 hours, with a partial pressure differential of oxygen of one standard atmosphere, and no absolute pressure differential. This known unit is abbreviated as cc.25µm/m².day.atm.

The OTR of a polymer is temperature dependent. One known convention for OTR testing of polymer films is to test and quote results at 25°C.

From time to time it is also desirable to have polymers with controlled transfer rates for gases other than oxygen, for example carbon dioxide, water vapour and sulphur dioxide. The gas transfer rate (GTR) for a given polymer depends on the gas itself, as well as on the polymer, its treatment, and the conditions of testing.

Typically, a metal foil provides a total barrier to the transfer of gases through a laminated film that includes the metal foil.

Some types of polymers can act as a gas barrier layer, but the use of such polymers tends to be constrained by cost. One widely used extrudible polymer having gas barrier properties is ethylene/vinyl alcohol (EVOH) copolymer. This is commonly used in conjunction with polyamides.

The OTR levels for a laminated flexible film comprising a metal foil and an extruded clear film are less than 0.0001 cc/m2.day.atm and approximately 1 cc/m2.day.atm for the foil and the film, respectively.

Products packaged in flexible films have various requirements in relation to the extent to which the products can tolerate exposure to oxygen.

Some products are highly tolerant to oxygen exposure and can be packaged in flexible films that do not have oxygen barrier properties. Water is an example of such a product.

Other products are highly sensitive to oxygen. Gas barrier properties for packaging for such products is an important consideration. Tomato paste is an example of an oxygen-sensitive product.

Some products can tolerate exposure to oxygen between the above-mentioned extremes or require that packaging allow a controlled minimum level of OTR to allow oxygen that is generated by the products over time to escape from the package. A peroxide-containing emulsion used for hair coloring that emits oxygen over time due to the decomposition of the peroxide is an example of such a product. The use of a flexible film that has an OTR that is too low will lead to inflation of a package containing the emulsion over time.

It is evident from the above that providing packaging for multiple products having different requirements in relation to exposure to oxygen is not a straightforward issue.

Similar comments to the above comments in relation to oxygen apply to other gases, such as carbon dioxide, water vapour and sulphur dioxide.

JP 10-194355 discloses a package halving two compartments having the pre-characterising features of the claims.

According to the present invention there is provided a package having the features defined in claim 1.

Forming the package from one laminated film having different OTR or GTR levels in different sections of the film to suit the different oxygen or other gas requirements of the products in the compartments provides the package with significant advantages over prior art packages.

In particular, the present invention makes it possible to provide a package made from a single laminated flexible film with multiple sections of controlled OTR or GTR to provide a multi-compartment package for the multiple products having different oxygen or other gas requirements.

Hair coloring products are an example of a product that is suitable for packaging in separate compartments of a package. Hair coloring products can comprise at least two ingredients. One ingredient is a colorant formulation, requiring a very high level of protection from oxygen and light. The other ingredient is an activating agent containing a peroxide chemical, requiring a controlled amount of OTR to avoid unwanted expansion or pressurization of a pouch containing the activating agent. An OTR greater than 1 cc/m2.day.atm, preferably greater than 2 cc/m2.day.atm, and more preferably greater than 2.5 cc/m2.day.atm is required for the activating agent.

Preferably the laminated film is perforated in a selected section or sections of the film to provide the laminated film with a higher OTR or GTR than the remainder of the laminated film so that the laminated film has different OTR or GTR levels in the perforated section or sections and the remainder of the film to suit the different OTR or GTR requirements of the different products in the compartments.

The perforations are less than 500 micron in average diameter.

More preferably, the perforations are less than 300 micron in average diameter.

Typically, the perforations are less than 100 micron in average diameter.

Preferably the laminated film comprises a layer of a metal foil and a layer of a polymer film.

Preferably the metal foil is an aluminium foil.

Preferably the aluminium foil has a thickness in a range of 5-20 micron.

The polymer film may have gas barrier properties. Alternatively the polymer film may have a relatively high OTR or GTR.

Preferably the polymers film is a PET.

Preferably the PET film has a thickness in a range of 5-20 micron.

Preferably the laminated film further comprises an hermetic sealing layer on the perforated section or sections to prevent leakage of the products from the compartments via the perforations.

According to the present invention there is provided a method of manufacturing a package comprising the features defined in claim 2.

The perforations are less than 500 micron in average diameter.

More preferably, the perforations are less than 300 micron in average diameter.

Typically, the perforations are less than 100 micron in average diameter.

The laminated film may be perforated by any suitable means such as, by way of example, spark erosion, laser drilling, pin perforation (hot and cold), and mechanical fracture by compression.

Preferably the laminated film comprises a layer of a metal foil and a layer of a polymer film.

Preferably the metal foil is an aluminium foil.

Preferably the aluminium foil has a thickness in a range of 5-20 micron.

The polymer film may hav gas barrier properties. Alternatively the polymer film may have a relatively high OTR or GTR.

Preferably the polymer film is a PET.

Preferably the PET film has a thickness in a range of 5-20 micron.

Preferably the laminated film is perforated by mechanically fracturing the film as described and claimed in International publication WO 02/40250 in the name of the applicant. The method and the apparatus of the International publication are based on mechanical fracture of film by elongation between narrowly spaced points.

Perforating the laminated film creates apertures in the film. Depending on the size of the apertures and the types of products to be packaged, the apertures may be unacceptable because of loss of the products from the compartments via the apertures.

In such situations, preferably the method further comprises reducing the OTR or GTR of the selected section or sections of the laminated film, preferably while retaining a greater OTR or GTR than the remainder of the laminated film, by laminating an hermetic sealing layer to the section or sections of the laminated film to prevent leakage of the products from the compartments via the apertures. Oxygen or other gases can then pass through the sealing layer.

Preferably the sealing layer is extrusion coated onto the flexible film.

It will be understood by those skilled in the art of application of sealing layers that the sealing layer may be applied by any other process including adhesive lamination, extrusion lamination, coextrusion coating, or coextrusion lamination, to provide desired sealing and other properties.

The method may further comprise forming the package from a sandwich of two sheets of the laminated film, with one film forming a back of the package and the other film forming a front of the package, and the perimeter of the sheets being heat sealed together to form a closed package.

In another, although not the only other possible, embodiment, the method may comprise forming the package by forming a sheet of the laminated film into a tube and heat sealing the sides and the ends of the tube to form a closed package.

The method may further comprise forming the package with a frangible seal between the compartments to facilitate allowing the products in the compartments to mix together prior to opening and discharging the mixed products from the package.

The applicant has carried out a series of laboratory trials and manufacturing plant trials to evaluate the present invention.

The applicant prepared test samples by the steps of:
(a) commercially reverse printing an oriented PET film,
(b) extrusion laminating the PET film and a 9 micron aluminium foil and forming an intermediate laminated film,
(c) perforating the intermediate laminated film so formed by a mechanical means, as discussed further below, and
(d) extrusion coating a sealing layer to the aluminium foil to provide an hermetic layer, or alternately
(e) extrusion laminating a sealing film layer to the aluminium foil to provide the hermetic layer.

The finished OTR of the film so produced was a function of the number of perforations, the apertures of the perforations, and the permeability of the sealing layer.

### LABORATORY TRIALS

Trial samples were prepared in a laboratory by perforating the above-described intermediate laminated film using one or other of:
(a) the method and the apparatus described and claimed in the applicant's International publication WO 02/40250, and
(b) cold needle perforation using commercially known art, and then
(c) extrusion coating the perforated intermediate laminated films with an LDPE sealing layer.

Finished trial laminated samples were assessed for OTR using the Mocon Oxtran method:

| Sample | OTR (cc/m2.day.at m) | Perforation density (perforation/m2) | Perforation density for OTR 2.5 |
|---|---|---|---|
| Control - no perforations | 0 | N/A | N/A |
| Perforated via WO02/40250 | 0.19 | 8800 | 115,800 |
| Needle perforations | 0.50 | 9600 | 48,000 |

The perforations for the needle perforations ranged 0.25-0.5mm and were marginally visible. The perforations via International publication WO 02/40250 were below 150 micron, and practically invisible.

### MANUFACTURING PLANT TRIALS

In a further series of trials, 12 micron PET film was extrusion laminated to 9 micron aluminium foil by methods of the known art to create an intermediate laminated film.

A tool comprising one tool upstand every 2.5mm in the machine direction and 21 upstands over a 50 mm width in the cross direction was used to perforate the intermediate laminated film. The tool was of the type disclosed in International publication WO 02/40250. The tool was applied to carrier roll according to PCT WO 02/40250 and applied to the film to form perforations in a continuous strip in the machine direction, with the strip having a width of 50mm in the cross direction.

Perforations were formed at an operating speed of 300 meters per minute, using a normal pressing force available in an 8-colour gravure printing press as known in the art.

The perforated intermediate laminated film, via the metal surface of the structure, was further extrusion laminated with a 20 microns layer of extrusion adhesive polymer to a 50 micron polyethylene film. Conditions of lamination were as usually applied to such lamination operations in the art.

The finished laminated film was further handled as understood in the art to provide trimmed reels of film with the modified OTR strip in a known location across the reel.

The OTR of the unmodified, i.e. unperforated, section of the film was below the detection limit of the measuring equipment (<0.1 cc/m2.day.atm)

The OTR of the modified area of the film varied from 10-11 cc/m2.day.atm, comfortably above the minimum target of 2.5

It is evident from the above trials that it is possible to form a laminated flexible film with different sections having different OTR levels.

It will be understood by those skilled in permeability science that any OTR level, within useable limits, may be obtained in sections of a laminated structure by the disclosed method.

It is also noted that the applicant has carried out successful manufacturing plant trials on laminated films having aluminium foil layers of 12 and 20 micron.

### DESCRIPTION OF THE DRAWINGS

The present invention is described further by way of example with reference to the accompanying drawings of which:
Figure 1 is a length of one embodiment of a laminated flexible film,
Figure 2 shows one embodiment of an apparatus for perforating a laminated flexible film,
Figure 3 shows another embodiment of an apparatus for perforating a laminated film,
Figure 4 is a diagram of one embodiment of an apparatus for making a laminated flexible film, and
Figure 5 is a perspective view of one embodiment of a package made from a laminated flexible film in accordance with the present invention.

### DETAILED DESCRIPTION

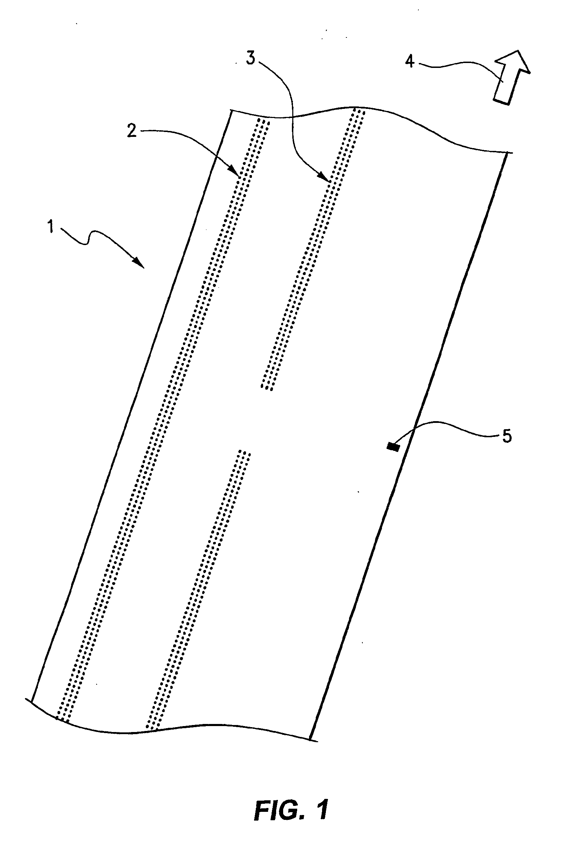

Figure 1 shows one embodiment of a web of a continuous laminated flexible film.

With reference to Figure 1, the web 1 shows arrays of perforations 2, 3 in sections of the web 1 extending in the machine direction 4 of the web 1. The perforations in section 2 are shown as a continuous band of perforations along the length of the web 1. The perforations may also be discontinuous along the length of the web 1, as shown in section 3, and in register to an eye-mark or register mark 5 as understood in the art of flexible packaging. The array of perforations 2, 3 may be random or ordered. The size and numbers of the perforations 2, 3 are selected to provide one or more that one compartment in a closed package made from the web 1 with a required OTR to suit the oxygen requirements of the product in the compartment. The web 1 also comprises a sealing layer (not shown) on the sections 2, 3 that make the sections liquid-tight. The sealing layer may be made from any suitable polymer or other material.

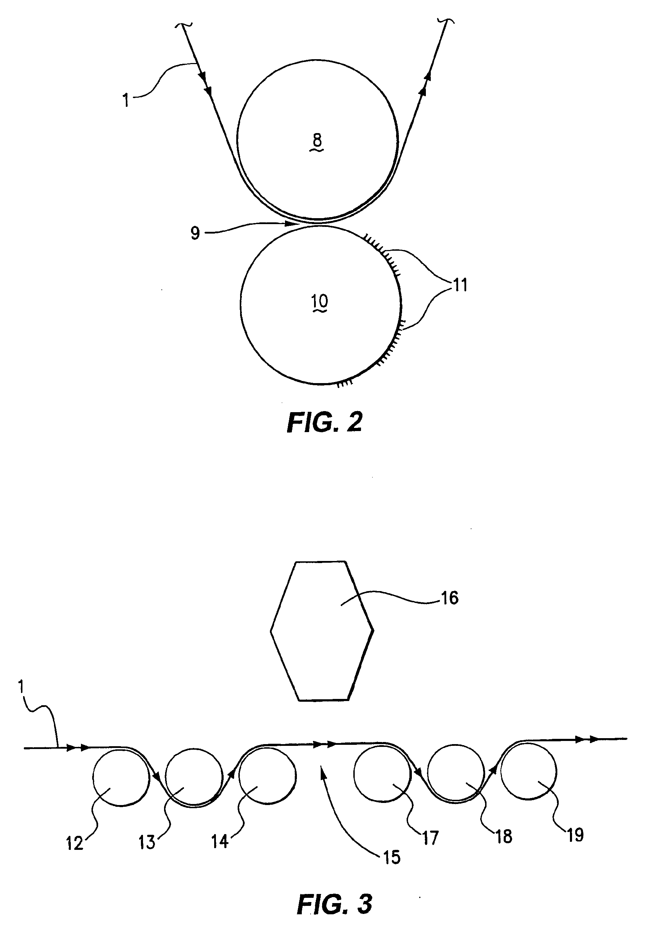

Figure 2 shows an embodiment of an apparatus for mechanically perforating the web 1. The web 1 (at this stage unperforated) passes around a counter roller 8 through a nip 9 formed by pressure of a perforating roller 10 against counter roller 8. The pressure may be applied by any convenient means. The perforating roller 10 carries perforating tools 11 which may be of any type, although the tools that are described and claimed in the applicant's International publication WO 02/40250 are preferred tools.

Figure 3 shows an alternate perforation apparatus, at which the perforations are formed by laser energy. This perforation apparatus is suited to certain web materials and the limitations will be understood by those skilled in perforation by laser technology. In this apparatus, the web 1 passes around a series of inward control rollers 12, 13, 14 that maintain tension in the web and is perforated at location 15 by a laser 16. The perforated web 1 exits via outward control rollers 17, 18, 19.

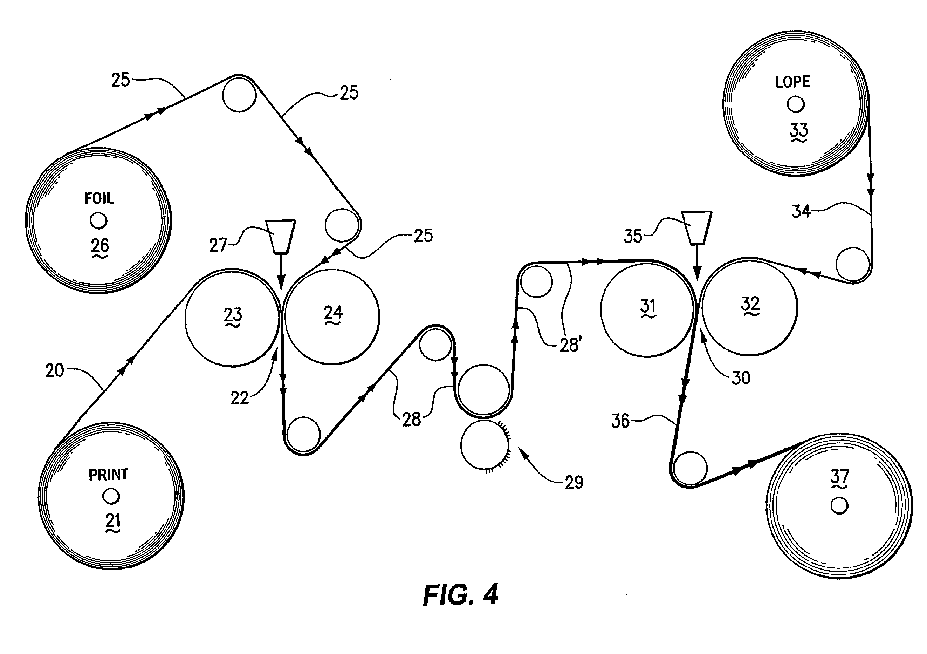

Figure 4 shows an embodiment of an apparatus of the present invention in a single integrated line. This integrated line is commonly known in the art as a "tandem laminator".

The drawing is a simplified drawing for clarity reasons and omits rollers and other structural features for this reason.

With reference to Figure 4, three webs of material are combined by a process of extrusion lamination. In order of process, web 20, typically a printed web, is unwound from an unwind station 21, and passes to a nip 22 formed between rollers 23 and 24. Simultaneously, web 25, typically a metal foil or other barrier material, is unwound from an unwind station 26 and passes to the nip 22. Extruder 27 deposits an appropriate melt adhesive into the nip 22. The combined web 28 exits the nip and proceeds to perforation station 29, examples of which are shown in previous Figures 2 and 3. Perforated web 28' exits the perforation station and proceeds to a second extrusion lamination station nip 30 formed between rollers 31 and 32. Unwind station 33 simultaneously unwinds web 34, typically a sealing web, and an extruder 35 deposits an appropriate melt adhesive into the nip 30. Finally, the finished zoned laminated film 36 is re-wound on a rewind station 37 for further processing as required.

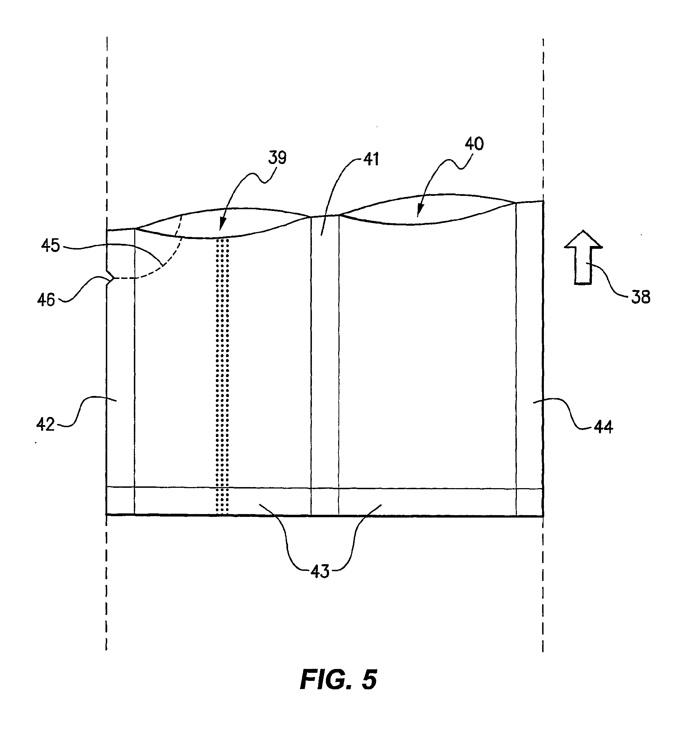

Figure 5 shows an embodiment of a finished package in the form of a two-compartment pouch in accordance with the present invention.

The pouch is typically formed from a web that is continuous in direction 38 and comprises breathable compartment 39 and gas-tight compartment 40, separated by an internal seal 41. The perimeter of the dual pouch is defined by edge seals 42, 43, 44, and a top seal (not shown) that closes the open ends. By selection of suitable sealant layers and sealing conditions, the skilled practitioner will understand that seal 41 may be a peelable or a frangible seal, while seals 42, 43, 44 and the top seal (not shown) may be non-frangible or fusion seals.

The pouch also comprises selected easy-opening tear areas 45 and tear notches 46, by any means in the art.

In practice, a product requiring venting, such as a peroxide, may be safely packaged in compartment 39, alongside a co-product requiring hermetic sealing in compartment 40, and the whole package delivered as a convenient single unit.

By way of example, whilst the above description of embodiments of the present invention focuses on adapting packaging to take into account the requirements of products in relation to oxygen, the present invention is not so limited and extends to other gases, such as carbon dioxide, water vapour and sulphur dioxide, and the GTR of laminated flexible films is an issue for such films.

## Claims

1. A package having two (39, 40) or more compartments made from a single laminated flexible film (1), with the compartments (39, 40) being suitable for storing products having different requirements in relation to contact of oxygen or other gases from outside the compartments or release of oxygen and other gases generated in the compartments, **characterised in that** the laminated film (1) being perforated (2, 3) in a selected section or sections of the film with perforations less than 500 microns in average diameter to provide the laminated film (1) with a higher gas transmission rate than the remainder of the laminated film (1) so that the laminated film (1) has different gas transmission rate levels in the perforated section or sections and the remainder of the film (1) to suit the different oxygen or other gas requirements of the products in the compartments (39, 40).

2. A method of manufacturing a package comprising two (39, 40) or more compartments suitable for holding different products having different requirements in relation to contact of oxygen or other gases from outside the compartments (39, 40) or release of oxygen and other gases generated in the compartments (39, 40), the method comprising forming a laminated flexible film (1) with a different gas transmission rate in a selected section or sections of the film (1) to the remainder of the laminated film (1) to suit the different oxygen or other gas requirements of the products ultimately packaged in the multiple compartments in the package formed from the laminated film (1), **characterised in that** forming comprises perforating the selected section or sections of the film (1) with perforations less than 500 micron in average diameter during or after the lamination step or steps to form the film (1).

3. The method defined in claim 2, wherein the perforations are less than 100 micron in average diameter.

4. The method defined in any one of claims 2 or 3 comprises perforating the laminated film (1) by any one of spark erosion, laser drilling, pin perforation (hot and cold), and mechanical fracture by compression.

5. The method defined in any one of claims 2 to 4 comprises perforating the laminated film (1) by mechanically fracturing the film by elongation between points.

6. The method defined in any one of claims 4 to 5 comprises forming the package from a sandwich of two sheets (20, 25) of the laminated film (1), with one film forming a back of the package and the other film forming a front of the package, and the perimeter of the sheets being heat sealed together to form a closed package.

7. The method defined in any one of claims 2 to 6 comprises forming the package by forming a sheet of the laminated film into a tube and heat sealing the sides and the ends of the tube to form a closed package.

8. The method defined in any one of claims 2 to 7 comprises forming the package with a frangible seal between the compartments to facilitate allowing the products in the compartments to mix together prior to opening and discharging the mixed products from the package.

## Patentansprüche

1. Verpackung mit zwei (39, 40) oder mehr Fächern aus einer einzelnen laminierten elastischen Folie (1), wobei die Fächer (39, 40) dazu geeignet sind, Produkte mit unterschiedlichen Anforderungen in Bezug auf Kontakt mit Sauerstoff oder anderen Gasen von außerhalb der Fächer oder die Freisetzung von Sauerstoff und anderen Gasen, die in den Fächern erzeugt werden, zu lagern, **dadurch gekennzeichnet, dass** die laminierte Folie (1) in einem ausgewählten Abschnitt oder ausgewählten Abschnitten der Folie mit Perforationen mit einem durchschnittlichen Durchmesser von weniger als 500 µm perforiert (2, 3) ist, um die laminierte Folie (1) mit einer höheren Gasübertragungsrate als die übrige laminierte Folie (1) zu versehen, so dass die laminierte Folie (1) unterschiedliche Gasübertragungsratenstufen in dem perforierten Abschnitt oder den perforierten Abschnitten und der übrigen Folie (1) aufweist, um den unterschiedlichen Sauerstoff- oder anderen Gasanforderungen der Produkte in den Fächern (39, 40) zu entsprechen.

2. Verfahren zur Herstellung einer Verpackung, die zwei (39, 40) oder mehr Fächer umfasst, welche zum Enthalten verschiedener Produkte geeignet sind, die unterschiedliche Anforderungen in Bezug auf Kontakt mit Sauerstoff oder anderen Gasen von außerhalb der Fächer (39, 40) oder die Freisetzung von Sauerstoff und anderen Gasen, die in den Fächern (39, 40) erzeugt werden, haben, wobei das Verfahren das Ausbilden einer laminierten elastischen Folie (1) mit einer unterschiedlichen Gasübertragungsrate in einem ausgewählten Abschnitt oder ausgewählten Abschnitten der Folie (1) zur übrigen laminierten Folie (1) umfasst, um den unterschiedlichen Sauerstoff- oder anderen Gasanforderungen der Produkte zu entsprechen, die letztlich in den mehrfachen Fächern in der Verpackung verpackt sind, welche aus der laminierten Folie (1) ausgebildet ist, **dadurch gekennzeichnet, dass** das Ausbilden das Perforieren des ausgewählten Abschnitts oder der ausgewählten Abschnitte der Folie (1) mit Perforationen mit einem durchschnittlichen Durchmesser von weniger als 500 µm während oder nach dem Laminierungsschritt oder den Laminierungsschritten zur Ausbildung der Folie (1) umfasst.

3. Verfahren nach Anspruch 2, wobei die Perforationen einen durchschnittlichen Durchmesser von weniger als 100 µm aufweisen.

4. Verfahren nach irgendeinem der Ansprüche 2 oder 3, umfassend das Perforieren der laminierten Folie (1) durch irgendeines von Funkenerosion, Laserbohren, Nadelperforation (heiß und kalt) und mechanischem Bruch durch Verdichtung.

5. Verfahren nach irgendeinem der Ansprüche 2 bis 4, umfassend das Perforieren der laminierten Folie (1) durch mechanisches Brechen der Folie durch Ausdehnung zwischen Punkten.

6. Verfahren nach irgendeinem der Ansprüche 4 bis 5, umfassend das Ausbilden der Verpackung aus einem Sandwich aus zwei Blättern (20, 25) der laminierten Folie (1), wobei eine Folie die Rückseite der Verpackung und die andere Folie eine Vorderseite der Verpackung bildet und der Perimeter der Blätter durch Hitze zusammengesiegelt ist, um eine geschlossene Verpackung zu bilden.

7. Verfahren nach irgendeinem der Ansprüche 2 bis 6, umfassend das Ausbilden der Verpackung durch Ausbilden eines Blatts der laminierten Folie zu einem Schlauch und Hitzesiegeln der Seiten und der Enden des Schlauchs zur Bildung einer geschlossenen Verpackung.

8. Verfahren nach irgendeinem der Ansprüche 2 bis 7, umfassend das Ausbilden der Verpackung mit einer zerbrechbaren Abdichtung zwischen den Fächern, um das Erlauben zu erleichtern, dass sich die Produkte in den Fächern vor dem Öffnen und Ausleeren der vermischten Produkte aus der Verpackung miteinander vermischen.

## Revendications

1. Conditionnement muni de deux (39, 40) compartiments ou plus, fait d'un unique film souple stratifié (1), les compartiments (39, 40) étant aptes à stocker des produits présentant différentes exigences en matière de contact avec l'oxygène ou d'autres gaz provenant de l'extérieur des compartiments ou de dégagement d'oxygène ou d'autres gaz générés dans les compartiments, **caractérisé en ce que** le film stratifié (1) est perforé (2, 3) dans une ou plusieurs sections sélectionnées du film par des perforations de diamètre moyen inférieur à 500 microns, pour donner au film stratifié (1) un taux de transmission de gaz plus élevé que le reste du film stratifié (1), de manière à ce que le film stratifié (1) présente différents taux de transmission de gaz dans la ou les sections perforées et le reste du film (1) afin de répondre aux différentes exigences, en matière d'oxygène ou d'autres gaz, des produits situés dans les compartiments (39, 40).

2. Procédé de fabrication d'un conditionnement comprenant deux (39, 40) compartiments ou plus aptes à contenir différents produits présentant différentes exigences en matière de contact avec l'oxygène ou d'autres gaz provenant de l'extérieur des compartiments (39, 40) ou de dégagement d'oxygène et d'autres gaz générés dans les compartiments (39, 40), le procédé comprenant la formation d'un film flexible stratifié (1) doté d'un taux de transmission de gaz différent, dans une ou plusieurs sections sélectionnées du film (1), du reste du film stratifié (1) pour répondre aux différentes exigences en matière d'oxygène ou d'autres gaz des produits allant être conditionnés dans les multiples compartiments (39, 40) du conditionnement formé par le film stratifié (1), **caractérisé en ce que** la formation comprend l'étape consistant à perforer la ou les sections sélectionnées du film (1) par des perforations de diamètre moyen inférieur à 500 microns pendant ou après l'étape ou les étapes de stratification pour former le film (1).

3. Procédé conforme à la revendication 2, où les perforations ont un diamètre moyen inférieur à 100 microns.

4. Procédé conforme à une quelconque des revendications 2 ou 3, comprenant la perforation du film stratifié (1) par un procédé quelconque parmi l'étincelage érosif, le perçage au laser, la perforation à aiguilles (à chaud et à froid), et la rupture mécanique par compression.

5. Procédé conforme à une quelconque des revendications 2 à 4 comprenant la perforation du film stratifié (1) par rupture mécanique du film par allongement entre points.

6. Procédé conforme à une quelconque des revendications 4 à 5 comprenant la formation du conditionnement à partir d'un sandwich de deux feuilles (20, 25) du film stratifié (1), un film formant un arrière du conditionnement et l'autre film formant un devant du conditionnement, et les feuilles étant assemblées l'une à l'autre sur leur périmètre par thermoscellage pour former un conditionnement fermé.

7. Procédé conforme à une quelconque des revendications 2 à 6 comprenant la formation du conditionnement en formant une feuille de film laminé en tube et en thermoscellant les côtés et les extrémités du tube pour former un conditionnement fermé.

8. Procédé conforme à une quelconque des revendications 2 à 7 comprenant la formation du conditionnement avec un joint frangible entre les compartiments pour faciliter la possibilité des produits contenus dans les compartiments de se mélanger les uns aux autres avant l'ouverture et la sortie du conditionnement des produits mélangés.
